# EUROPEAN PATENT APPLICATION

(11) **EP 4 667 833 A1**
(43) Date of publication of application: **24.12.2025**
(21) Application number: 23923672.2
(22) Date of filing: 14.09.2023
(51) Int. Cl.: F24D 17/02, F24H 9/20, F24D 19/10, H02J 3/38

(54) **VARIABLE-FREQUENCY HEAT PUMP WATER HEATER, CONTROL METHOD THEREFOR, APPARATUS, AND STORAGE MEDIUM**

(30) Priority: 22.02.2023 CN 202310156312
(71) Applicant: GD Midea Air-Conditioning Equipment Co., Ltd., Foshan, Guangdong 528311 (CN)
(72) Inventor: ZHANG, Xuefen, Foshan, Guangdong 528311 (CN); LYU, Mengxin, Foshan, Guangdong 528311 (CN); JIANG, Haihao, Foshan, Guangdong 528311 (CN); ZENG, Xianjie, Foshan, Guangdong 528311 (CN); LIU, Han, Foshan, Guangdong 528311 (CN); CAI, Weiping, Foshan, Guangdong 528311 (CN); TAN, Xin, Foshan, Guangdong 528311 (CN)
(74) Representative: RGTH
(86) International application number: PCT/CN2023/118912
(87) International publication number: WO 2024/174507

(57) **Abstract**

A variable-frequency heat pump water heater (107), a control method therefor, an apparatus, and a storage medium. The variable-frequency heat pump water heater (107) is powered by a grid-connected photovoltaic power generation system. The control method comprises: acquiring the current operation state of the variable-frequency heat pump water heater (107); on the basis of the current operation state, determining a photovoltaic residual electricity consumption scheme of the photovoltaic power generation system; and on the basis of the photovoltaic residual electricity consumption scheme, controlling the variable-frequency heat pump water heater (107) to operate, the operation states of the variable-frequency heat pump water heater (107) at least comprising a first state in which heating is not started and a second state of heating on the basis of a compressor, and the types of the photovoltaic residual electricity consumption scheme at least comprising a first scheme corresponding to the first state and a second scheme corresponding to the second state.

## Description

### CROSS-REFERENCE TO RELATED APPLICATION

This application is filed based on and claims priority to Chinese patent application No. 202310156312.0 filed on February 22, 2023, the disclosure of which is hereby incorporated by reference in its entirety.

### TECHNICAL FIELD

The application relates to the technical field of water heaters, and in particular to a variable-frequency heat pump water heater, a method and apparatus for controlling the same, and a storage medium.

### BACKGROUND

As a natural clean energy, solar energy is widely used increasingly. In the related art, it is based on a grid-connected photovoltaic (PV) system to supply electric energies generated by PV power generation to power loads such as a water heater, thereby replacing a traditional fossil energy by the clean energy, which may reduce carbon emissions and help zero-carbon power generation.

However, a normal operation mode of the water heater is usually a default mode or a user-set mode, here the default mode is that the water heater is turned off when a current water temperature to which the water heater operates is equal to or greater than a default-set water temperature, and is turned on again when the current water temperature is less than or equal to the default-set water temperature minus hysteresis temperature; the user-set mode is that the water heater operates according to a target water temperature and/or an operation time period pre-set by the user. The above operation modes of the water heater do not consider consumption of electric energies from PV power generation, which affects recycling of the clean energy.

### SUMMARY

In view of this, embodiments of the application provide a variable-frequency heat pump water heater, a method and apparatus for controlling the same, and a storage medium, which are intended to improve an effect of consumption of PV electric energies effectively.

Technical solutions of the embodiments of the application are implemented as follows.

According to a first aspect, an embodiment of the application provides a method for controlling a variable-frequency heat pump water heater, the variable-frequency heat pump water heater is powered by a grid-connected PV power generation system, the method comprises the following operations.

A current operation state of the variable-frequency heat pump water heater is acquired.

A PV surplus electricity consumption scheme of the PV power generation system is determined based on the current operation state.

Operation of the variable-frequency heat pump water heater is controlled based on the PV surplus electricity consumption scheme.

Operation states of the variable-frequency heat pump water heater comprise at least a first state where heating is not started and a second state where heating is performed based on a compressor; types of the PV surplus electricity consumption scheme comprise at least a first scheme corresponding to the first state and a second scheme corresponding to the second state.

In some implementations, if the current operation state is the first state, the PV surplus electricity consumption scheme is the first scheme, and the operation of controlling, based on the PV surplus electricity consumption scheme, operation of the variable-frequency heat pump water heater may comprise the following operations.

A state of charge (SOC) value of an energy storage unit in the PV power generation system, an on-grid power value transmitted by the PV power generation system to a power grid, and a current water temperature value of the variable-frequency heat pump water heater are acquired.

If it is determined that the SOC value is equal to or greater than a first set value, the on-grid power value is equal to or greater than a first power value, and the current water temperature value is less than or equal to a second set value, then a set temperature value of the variable-frequency heat pump water heater is adjusted to be a sum of the current water temperature value and a temperature hysteresis, and the compressor of the variable-frequency heat pump water heater is controlled to start operation.

In some implementations, if the current operation state is the second state, the PV surplus electricity consumption scheme is the second scheme, and the operation of controlling, based on the PV surplus electricity consumption scheme, operation of the variable-frequency heat pump water heater may comprise the following operations.

If it is determined that an operation time period of the compressor after it is started reaches a first set time period, then a SOC value of an energy storage unit in the PV power generation system and an on-grid power value transmitted by the PV power generation system to a power grid are acquired.

If it is determined that the SOC value is equal to or greater than a third set value, and the on-grid power value is equal to or greater than a second power value, then the set temperature value of the variable-frequency heat pump water heater is adjusted based on a set temperature adjustment value and a current set temperature value of the variable-frequency heat pump water heater.

In some implementations, the operation of adjusting, based on the set temperature adjustment value and the current set temperature value of the variable-frequency heat pump water heater, the set temperature value of the variable-frequency heat pump water heater may comprise the following operations.

If the current set temperature value is an initial set temperature value, then the set temperature value is updated to be a sum of the initial set temperature value and the set temperature adjustment value.

If the current set temperature value is not one of the initial set temperature value and a set temperature upper limit value, and the current set temperature value has been maintained for a second set time period, then the set temperature value is updated to be a smaller one of a sum of the current set temperature value and the set temperature adjustment value, and the set temperature upper limit value.

In some implementations, the method may further comprise the following operation, if the variable-frequency heat pump water heater is provided with an electric heater configured to perform electric auxiliary heating, and the electric heater is not turned on in the second state.

If the current set temperature value is the set temperature upper limit value, and the current set temperature value has been maintained for the second set time period, then the electric heater is turned on.

In some implementations, if the variable-frequency heat pump water heater is provided with an electric heater configured to perform electric auxiliary heating, the operation states of the variable-frequency heat pump water heater may further comprise a third state where only the electric heater is started to perform heating; the types of the PV surplus electricity consumption scheme further comprise a third scheme corresponding to the third state.

In some implementations, if the current operation state is the third state, the PV surplus electricity consumption scheme may be the third scheme, and the operation of controlling, based on the PV surplus electricity consumption scheme, operation of the variable-frequency heat pump water heater may comprise the following operations.

An on-grid power value transmitted by the PV power generation system to a power grid is acquired.

If it is determined that the on-grid power value is equal to or greater than a third power value, then a set temperature value of the variable-frequency heat pump water heater is adjusted to be a set temperature upper limit value.

According to a second aspect, an embodiment of the application provides an apparatus for controlling a variable-frequency heat pump water heater, the variable-frequency heat pump water heater is powered by a grid-connected PV power generation system, the apparatus comprises an acquisition module, a determination module and a control module.

The acquisition module is configured to acquire a current operation state of the variable-frequency heat pump water heater.

The determination module is configured to determine, based on the current operation state, a PV surplus electricity consumption scheme of the PV power generation system.

The control module is configured to control, based on the PV surplus electricity consumption scheme, operation of the variable-frequency heat pump water heater.

Operation states of the variable-frequency heat pump water heater comprise at least a first state where heating is not started and a second state where heating is performed based on a compressor; types of the PV surplus electricity consumption scheme comprise at least a first scheme corresponding to the first state and a second scheme corresponding to the second state.

According to a third aspect, an embodiment of the application provides a variable-frequency heat pump water heater, the variable-frequency heat pump water heater is powered by a grid-connected PV power generation system, and comprises a processor and a memory configured to store a computer program executable on the processor. The processor is configured to perform operations of the method described in the first aspect of the embodiments of the application when the processor executes the computer program.

According to a fourth aspect, an embodiment of the application provides a computer storage medium, the computer storage medium has stored thereon a computer program, operations of the method described in the first aspect of the embodiments of the application are implemented when the computer program is executed by a processor.

According to the technical solutions provided in the embodiments of the application, the variable-frequency heat pump water heater is powered by a grid-connected PV power generation system, the method for controlling the variable-frequency heat pump water heater comprises the following operations. A current operation state of the variable-frequency heat pump water heater is acquired. A PV surplus electricity consumption scheme of the PV power generation system is determined based on the current operation state. Operation of the variable-frequency heat pump water heater is controlled based on the PV surplus electricity consumption scheme. Operation states of the variable-frequency heat pump water heater comprise at least a first state where heating is not started and a second state where heating is performed based on a compressor; types of the PV surplus electricity consumption scheme comprise at least a first scheme corresponding to the first state and a second scheme corresponding to the second state. In this way, the PV surplus electricity consumption scheme may be dynamically adjusted according to the current operation state of the variable-frequency heat pump water heater, such that a clean energy converted based on PV power generation may be locally used to a maximum extent, thereby improving the effect of consumption of PV electric energies effectively.

### BRIEF DESCRIPTION OF THE DRAWINGS

FIG. 1 is a schematic structural diagram of a heat pump water heater in the related art.
FIG. 2 is a schematic diagram of a structure in which a grid-connected PV power generation system supplies power to a variable-frequency heat pump water heater according to an embodiment of the application.
FIG. 3 is a schematic flowchart of a method for controlling a variable-frequency heat pump water heater according to an embodiment of the application.
FIG. 4 is a schematic flowchart of a method for controlling a variable-frequency heat pump water heater according to an application example of the application.
FIG. 5 is a schematic structural diagram of an apparatus for controlling a variable-frequency heat pump water heater according to an embodiment of the application.
FIG. 6 is a schematic structural diagram of a variable-frequency heat pump water heater according to an embodiment of the application.

### DETAILED DESCRIPTION

The application will be further described in detail below with reference to the drawings and embodiments.

Unless otherwise defined, all technical and scientific terms used here have the same meaning as those usually understood by technicians in the technical field to which the application belongs. The terms used here in the description of the application are only for the purpose of describing specific embodiments and are not intended to limit the application.

In the related art, new energy power generation represented by photovoltaic (PV) mainly is developing rapidly. Superimposition of PV power supply based on an alternating current (AC) power grid (also known as superimposed PV transformation) becomes popular gradually. Considering volatility and intermittent characteristics of energy from PV power generation, and considering difficulty of storing the energy, the energy will be wasted if it is not used in time. It is urgent to consume and absorb the energy from PV power generation (also known as consumption of PV power generation). For example, a "self-generation and self-use" mode may be adopted to use the energy generated by PV power generation to supply power to household power loads. However, electricity usage demands related to the household power loads usually cannot match the above volatility and intermittent characteristics of the energy from PV power generation or the like, which affects an effect of consumption of the PV power generation.

Based on this, a method for controlling a variable-frequency heat pump water heater is provided in an embodiment of the application, which is intended to improve the effect of consumption of the PV power generation based on optimized control of the variable-frequency heat pump water heater.

Here, the variable-frequency heat pump water heater (also known as a variable-frequency air energy water heater) refers to a heat pump water heater based on a variable-frequency compression technology, the heat pump water heater may use an air energy as a heat source, converts heat contained in the air that cannot be used directly into a usable high-level thermal energy, thereby achieving a purpose of heating water.

Simply speaking, the heat pump water heater operates according to a "reverse Carnot" principle. Specifically, a "outdoor unit" is used as a heat exchanger to absorb heat from the outdoor air, heat a working medium (refrigerant) with a low boiling point and evaporate the working medium (refrigerant); a refrigerant vapor is compressed by a compressor such that temperature of the refrigerant vapor rises, then the refrigerant vapor enters a water tank, and releases heat to water in the water tank such that the refrigerant vapor is condensed and liquefied; then the condensed and liquefied refrigerant is throttled, depressurized and cooled, and returns to the outdoor heat exchanger to enter a next cycle.

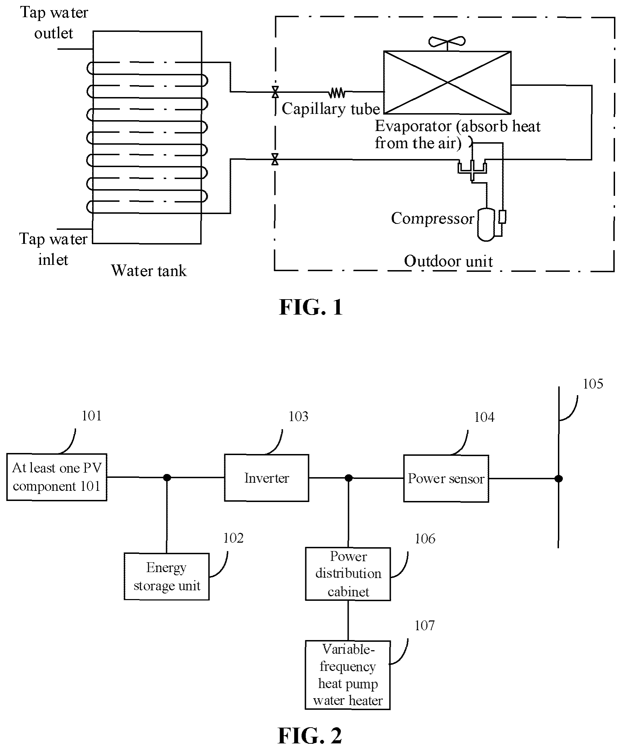

Exemplarily, as shown in FIG. 1, the heat pump water heater comprises an evaporator and a compressor arranged outdoors and a water tank arranged indoors, a portion of a refrigerant pipeline coiled around an outer wall of the water tank forms a condenser, the refrigerant pipeline is connected to the evaporator and the compressor, and a throttling device (such as a capillary tube) is arranged on the refrigerant pipeline between the condenser and the evaporator. The evaporator may absorb heat from the air and transfer the heat to the water tank through the refrigerant pipeline, to heat water in the water tank. Specifically, the refrigerant pipeline may release heat to tap water in the water tank through the condenser coiled around the outer wall of the water tank, the refrigerant after releasing heat is condensed into a liquid refrigerant, the liquid refrigerant becomes a low-temperature and low-pressure two-phase fluid after the liquid refrigerant is depressurized through the capillary tube, the low-temperature and low-pressure two-phase fluid absorbs heat from an outdoor air source at the evaporator, the refrigerant after absorbing heat is introduced into an air inlet of the compressor, then a high-temperature and high-pressure refrigerant obtained after the refrigerant after absorbing heat is compressed by the compressor is transferred to the condenser to release heat, and cycles are repeated in this way to achieve a purpose of heating the tap water in the water tank.

Considering that temperatures of four seasons in one year are different and change, people's demands for hot water are different too. For example, when the temperature is low, the temperature of hot water required for bathing needs to be very high naturally. When the temperature is high, the temperature of hot water required for bathing needs to be relatively low naturally. Furthermore, a fixed-frequency heat pump water heater may operate at only a single rated frequency, resulting in insufficient heating performance in winter and excessive heating in summer. However, a variable-frequency heat pump water heater based on a variable-frequency compression technology may control speed of the compressor based on a frequency transformer, to cope with environmental variation better; and repeated on and off of the compressor may be avoided based on the variable-frequency compression technology, which is conducive to saving energy and reducing energy consumption.

It should be noted that an operation frequency of the compressor of the variable-frequency heat pump water heater is related to a difference between a set temperature value and a current water temperature value of the variable-frequency heat pump water heater. For example, the operation frequency of the compressor increases as the difference increases, and decreases as the difference decreases.

It should be noted that considering stability and reliability of heating, for example, a heating effect based on the air source may be limited when temperature of an external environment is too low, then the variable-frequency heat pump water heater may also be provided with an electric heater configured to perform electric auxiliary heating, and thus the electric heater may be turned on to perform heating according to demands.

Before describing the method for controlling the variable-frequency heat pump water heater according to the embodiment of the application, a power supply structure of the variable-frequency heat pump water heater according to the embodiment of the application is described exemplarily.

In an application example, as shown in FIG. 2, a variable-frequency heat pump water heater 107 is powered by a grid-connected PV power generation system. The grid-connected PV power generation system comprises at least one PV component 101, an energy storage unit 102, an inverter 103, a power sensor 104, a power grid 105, and a power distribution cabinet 106.

Exemplarily, at least one PV component 101 is configured to convert solar energy into direct current (DC) electric energies and output the DC electric energies. For example, the at least one PV component 101 may be a PV panel that converts light energies into electric energies directly by using a PV effect of a semiconductor interface. The at least one PV component 101 is connected to the energy storage unit 102 and the inverter 103. An AC current obtained after conversion by the inverter 103 is supplied to power loads such as the variable-frequency heat pump water heater 107 or the like through the power distribution cabinet 106, and the inverter 103 may also transmit PV surplus electricity to the power grid 105 through the power sensor 104, thereby forming a power supply scheme of transmitting surplus electric energies to the power grid, that is, forming a PV power generation grid-connected mode of self-generation and self-use and transmitting the surplus electricity to the grid.

Here, the power sensor 104 (also known as a bidirectional electricity meter) is configured to detect an on-grid power of transmitting the PV surplus electricity to the power grid 105 and an electricity-drawing power of drawing electricity from the power grid 105. The power distribution cabinet 106 is configured to supply power to the power loads. Exemplarily, an AC-AC (alternating current to alternating current) conversion circuit and/or an AC-DC (alternating current to direct current) conversion circuit may be provided in the power distribution cabinet 106, which is not limited in the embodiment of the application.

Exemplarily, DC electricity outputted by at least one PV component 101 may also be converted by a DC-DC (direct current to direct current) conversion circuit, and then connected to the energy storage unit 102 and the inverter 103. The DC-DC conversion circuit is configured to convert the DC electricity outputted by at least one PV component 101 to a target DC voltage, to charge the energy storage unit 102 and/or input into the inverter 103.

Exemplarily, the energy storage unit 102 may comprise at least one battery or battery cluster, and a battery management system (BMS). At least one battery or battery cluster is connected in series or in parallel, to form a battery array. A number of battery clusters may be flexibly increased or decreased according to a demand of an amount of backup power or a set backup power time period. The BMS may control and adjust output power of the battery cluster. Due to different numbers of batteries or battery clusters in the energy storage unit 102, an amount of backup power or a backup power time period corresponding to the energy storage unit 102 is also different.

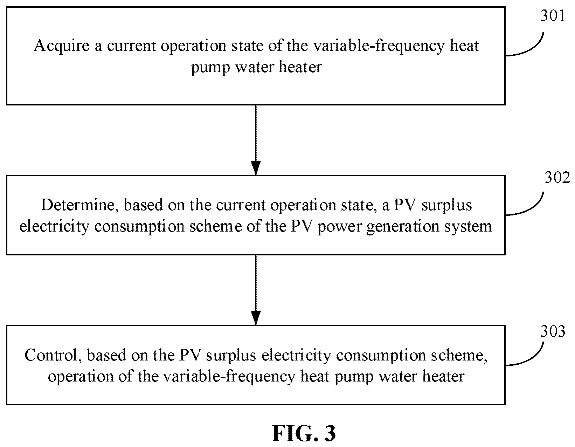

An embodiment of the application provides a method for controlling a variable-frequency heat pump water heater, the variable-frequency heat pump water heater is powered by the grid-connected PV power generation system shown in FIG. 2, and the method may be performed by the variable-frequency heat pump water heater or by an apparatus for controlling the variable-frequency heat pump water heater. As shown in FIG. 3, the method comprises the following operations 301 to 303.

In operation 301, a current operation state of the variable-frequency heat pump water heater is acquired.

In operation 302, a PV surplus electricity consumption scheme of the PV power generation system is determined based on the current operation state.

In operation 303, operation of the variable-frequency heat pump water heater is controlled based on the PV surplus electricity consumption scheme.

Here, operation states of the variable-frequency heat pump water heater comprise at least a first state where heating is not started and a second state where heating is performed based on a compressor; types of the PV surplus electricity consumption scheme comprise at least a first scheme corresponding to the first state and a second scheme corresponding to the second state.

It may be understood that according to the embodiment of the application, the PV surplus electricity consumption scheme may be dynamically adjusted according to the current operation state of the variable-frequency heat pump water heater, such that a clean energy converted based on PV power generation may be locally used to a maximum extent, thereby improving the effect of consumption of PV electric energies effectively.

Specifically, since the operation frequency of the compressor of the variable-frequency heat pump water heater increases at a startup stage, it may result in that PV power generation turns from surplus to deficit. According to the embodiment of the application, different PV surplus electricity consumption schemes are used for the above first and second states, which may use hot water in the variable-frequency heat pump water heater to store energies to a maximum extent, to achieve consumption of the PV power generation.

In some embodiments, if the current operation state is the first state, the PV surplus electricity consumption scheme is the first scheme, and the operation of controlling, based on the PV surplus electricity consumption scheme, operation of the variable-frequency heat pump water heater comprises the following operations.

A state of charge (SOC) value of an energy storage unit in the PV power generation system, an on-grid power value transmitted by the PV power generation system to a power grid, and a current water temperature value of the variable-frequency heat pump water heater are acquired.

If it is determined that the SOC value is equal to or greater than a first set value, the on-grid power value is equal to or greater than a first power value, and the current water temperature value is less than or equal to a second set value, then a set temperature value of the variable-frequency heat pump water heater is adjusted to be a sum of the current water temperature value and a temperature hysteresis, and the compressor of the variable-frequency heat pump water heater is controlled to start operation.

It may be understood that the SOC value of the energy storage unit is used to reflect a remaining capacity of the energy storage unit, and its numerical value is defined as a ratio of the remaining capacity to a capacity of the battery, and is usually expressed as a percentage. When SOC = 0, it means that the battery is fully discharged, and when SOC = 1, it means that the battery is fully charged. Here, the SOC value of the energy storage unit may be generated by the BMS based on some external characteristics of the battery. For example, SOC may be monitored by using a formula according to parameters related to the battery such as an internal resistance, open circuit voltage, temperature, current, etc.

Here, the on-grid power value transmitted by the PV power generation system to the power grid may be detected by the above power sensor, and may represent an on-grid power of PV surplus electricity generated by the PV power generation system.

Here, the first set value, the first power value and the second set value may be pre-set according to demands of consumption of the PV power generation, and the temperature hysteresis may be set based on demands of controlling fluctuation of water temperature of the water heater. For example, in an application example, the first set value is 80%, the first power value is a rated power value of the compressor of the variable-frequency heat pump water heater, and the second set value is a set temperature upper limit value minus the temperature hysteresis.

It may be understood that when the variable-frequency heat pump water heater is in the first state, the operation of the variable-frequency heat pump water heater is controlled based on the first scheme. When there is a surplus of PV power generation, it may prefer using the PV surplus electricity to start operation of the compressor, and energies required to increase temperature of water in the variable-frequency heat pump water heater may be used to achieve consumption of the PV power generation.

In some embodiments, if the current operation state is the second state, the PV surplus electricity consumption scheme is the second scheme, and the operation of controlling, based on the PV surplus electricity consumption scheme, operation of the variable-frequency heat pump water heater comprises the following operations.

If it is determined that an operation time period of the compressor after it is started reaches a first set time period, then a SOC value of an energy storage unit in the PV power generation system and an on-grid power value transmitted by the PV power generation system to a power grid are acquired.

If it is determined that the SOC value is equal to or greater than a third set value, and the on-grid power value is equal to or greater than a second power value, then the set temperature value of the variable-frequency heat pump water heater is adjusted based on a set temperature adjustment value and a current set temperature value of the variable-frequency heat pump water heater.

Here, considering that the operation frequency of the compressor of the variable-frequency heat pump water heater increases at the startup stage, which may result in that PV power generation turns from surplus to deficit, then in order to avoid misjudgment of a PV surplus electricity consumption strategy due to increase of the operation frequency of the compressor at the startup stage, the first set time period may be pre-set such that after the compressor operates stably, whether the PV power generation is in surplus may be determined. Exemplarily, the first set time period may be 15 minutes.

Here, the third set value and the second power value may be pre-set according to demands of consumption of the PV power generation. The set temperature value is used as a target temperature to which the temperature of water in the variable-frequency heat pump water heater is heated, and is used to control heating. When the set temperature adjustment value is used as a surplus of PV power generation, the set temperature value is increased gradually based on a set step size, which may effectively prevent the PV power generation from turning from surplus to deficit due to excessive increase of the set temperature value, such that it is conducive to achieving consumption of the PV power generation continuously and reliably. For example, in an application example, the third set value is 80%, the second power value is 500 watts (W), and the set temperature adjustment value is 5°C.

In some embodiments, the operation of adjusting, based on the set temperature adjustment value and the current set temperature value of the variable-frequency heat pump water heater, the set temperature value of the variable-frequency heat pump water heater comprises the following operations.

If the current set temperature value is an initial set temperature value, then the set temperature value is updated to be a sum of the initial set temperature value and the set temperature adjustment value.

If the current set temperature value is not one of the initial set temperature value and a set temperature upper limit value, and the current set temperature value has been maintained for a second set time period, then the set temperature value is updated to be a smaller one of a sum of the current set temperature value and the set temperature adjustment value, and the set temperature upper limit value.

Exemplarily, the initial set temperature value may be 40°C, and the set temperature upper limit value may be 70°C. It may be understood that those skilled in the art may set the above initial set temperature value and/or set temperature upper limit value reasonably according to usage demands of hot water. Exemplarily, the second set time period may be 5 minutes, and may be understood as an interval time period for increasing the set temperature value gradually, and those skilled in the art may set it reasonably based on demands.

In some embodiments, the method further comprises the following operation, if the variable-frequency heat pump water heater is provided with an electric heater configured to perform electric auxiliary heating, and the electric heater is not turned on in the second state.

If the current set temperature value is the set temperature upper limit value, and the current set temperature value has been maintained for the second set time period, then the electric heater is turned on.

It may be understood that in the second state, if it is determined that the PV power generation is in surplus, the electric heater may be turned on to store heat quickly in addition to increasing the set temperature value gradually. Specifically, if the variable-frequency heat pump water heater is in the second state, after it is determined that the compressor starts operation for the first set time period, the acquired SOC value is equal to or greater than the third set value and the on-grid power value is equal to or greater than the second power value, then it is determined that the PV power generation is in surplus; and the current set temperature value is the set temperature upper limit value, and the current set temperature value has been maintained for the second set time period, then the electric heater is turned on when it is not turned on, thus the PV surplus electricity may be used to supply power to the electric heater, and thus quick consumption of the PV power generation may be achieved by heating water.

In some embodiments, if the variable-frequency heat pump water heater is provided with an electric heater configured to perform electric auxiliary heating, the operation states of the variable-frequency heat pump water heater further comprises a third state where only the electric heater is started to perform heating; the types of the PV surplus electricity consumption scheme further comprise a third scheme corresponding to the third state.

In some embodiments, if the current operation state is the third state, the PV surplus electricity consumption scheme is the third scheme, and the operation of controlling, based on the PV surplus electricity consumption scheme, operation of the variable-frequency heat pump water heater comprises the following operations.

An on-grid power value transmitted by the PV power generation system to a power grid is acquired.

If it is determined that the on-grid power value is equal to or greater than a third power value, then a set temperature value of the variable-frequency heat pump water heater is adjusted to be a set temperature upper limit value.

It may be understood that in the third state, if the on-grid power value is equal to or greater than the third power value, then it is determined that the PV power generation is in surplus, and at this time, the set temperature value of the variable-frequency heat pump water heater may be adjusted to be the set temperature upper limit value, thus the PV surplus electricity may be used to supply power to the electric heater, and maximum consumption of the PV power generation may be achieved by heating hot water.

It should be noted that the operation states of the variable-frequency heat pump water heater may be switched based on a set heating strategy or based on a user's control instructions. For example, the variable-frequency heat pump water heater may operate in the above second or third state at a heating operation time period specified by the user, and operate in the above first state at other time periods, which is not limited in the embodiments of the application.

The method for controlling the variable-frequency heat pump water heater according to the embodiment of the application will be exemplified below with reference to an application example.

In this application example, the method for controlling the variable-frequency heat pump water heater comprises: selecting a PV surplus electricity consumption strategy (i.e., the above PV surplus electricity consumption scheme) according to the current operation state of the variable-frequency heat pump water heater.

Here, the operation states of the variable-frequency heat pump water heater comprise the following four states: state a, state b, state c and state d, here state a indicates that both the compressor and electric heating are turned off (corresponding to the above first state), state b indicates that only the electric heating is turned on (corresponding to the above third state), state c indicates that only the compressor is turned on, and state d indicates that both the compressor and the electric heating are turned on.

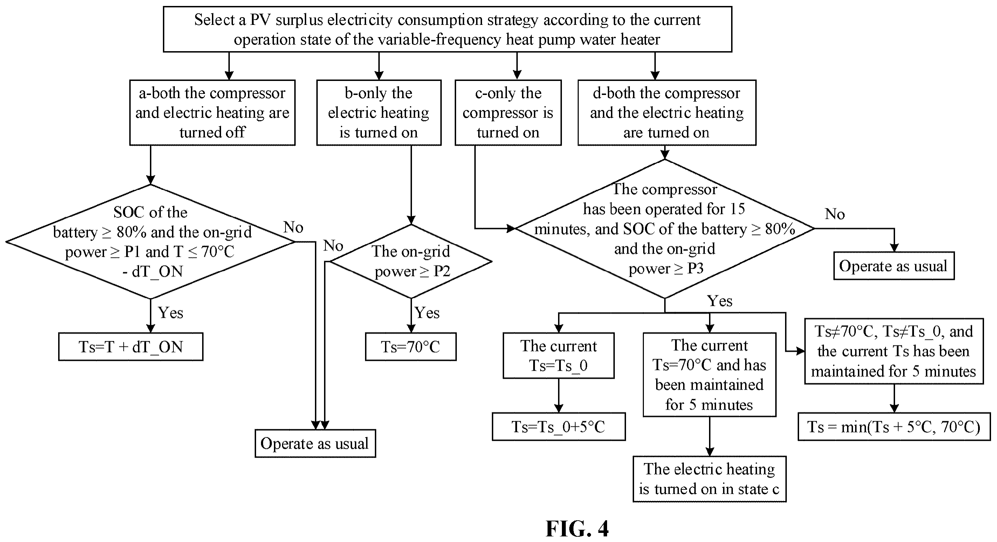

A PV surplus electricity consumption strategy corresponding to each operation state in this application example will be exemplarily described below with reference to FIG. 4.

If the current operation state is state a, it is determined whether the SOC value of the battery is ≥ 80% and whether the on-grid power value is ≥ P1 and whether T is ≤ 70°C - dT_ON, here P1 is a rated power of the compressor (i.e., the above first power value), 70°C is a set temperature upper limit, and dT_ON is a temperature hysteresis. If yes, the compressor may be started to operate by using the PV surplus electricity, and the set temperature value Ts=T + dT_ON is set, here T is a current water temperature; if no, the variable-frequency heat pump water heater operates as usual, that is, maintains the current operation state.

If the current operation state is state b, it is determined whether the on-grid power value is ≥ P2, here P2 is the above third power value which may be 100W. If yes, the set temperature value Ts = 70°C is set; if no, the variable-frequency heat pump water heater operates as usual.

If the current operation state is state c or state d, it waits until the compressor has been operated for 15 minutes, then it is determined whether the PV power generation is in surplus, whether the SOC value of the battery is ≥ 80% and whether the on-grid power value is ≥ P3, here P3 is the above second power value which may be 500W. If yes, the set temperature value may be increased; if no, the variable-frequency heat pump water heater operates as usual.

Specific strategies for increasing the set temperature value are as follows.

If the current set temperature value is Ts_0, then the set temperature value Ts = Ts_0 + 5°C is set, here Ts_0 is the initial set temperature value, and 5°C is a step size for increasing the water temperature gradually.

If the current set temperature value is 70°C and has been maintained for 5 minutes, the electric heating is turned on in state c and is not activated in state d.

If Ts≠70°C, Ts≠Ts_0, and the current set temperature value has been maintained unchanged for 5 minutes, then Ts = min(Ts + 5°C, 70°C) is set.

It may be understood that the control method according to this application example has advantageous effects as follows.
1) It waits until the compressor has been operated for 15 minutes, then it starts to determine whether the PV power generation is in surplus, which may effectively avoid misjudgment due to increase of the frequency of the compressor at the startup stage, such that after the compressor operates stably, it is determined whether the PV power generation is in surplus, thereby achieving consumption of the PV surplus electricity effectively.
2) When the PV power generation is in surplus, the water temperature is increased gradually, the set temperature value is increased gradually based on a set step size, which may effectively prevent the PV power generation from turning from surplus to deficit due to excessive increase of the set temperature value, such that it is conducive to achieving consumption of the PV surplus electricity continuously and reliably.
3) When the set temperature value is an upper limit of 70°C, the electric heating is not turned on, and PV is in surplus, then the PV surplus electricity may be used to turn on the electric heating to heat water quickly, and thus quick consumption of the PV surplus electricity may be achieved by heating the water.

In order to implement the method according to the embodiment of the application, an embodiment of the application further provides an apparatus for controlling a variable-frequency heat pump water heater, which corresponds to the above method for controlling the variable-frequency heat pump water heater, and each operation in the embodiment of the above method for controlling the variable-frequency heat pump water heater is also fully applicable to the embodiment of the apparatus for controlling the variable-frequency heat pump water heater.

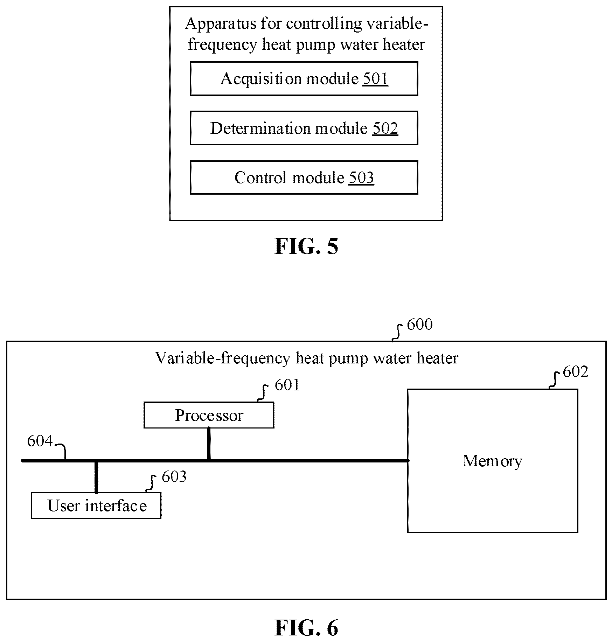

As shown in FIG. 5, the apparatus for controlling the variable-frequency heat pump water heater comprises an acquisition module 501, a determination module 502 and a control module 503. The acquisition module 501 is configured to acquire a current operation state of the variable-frequency heat pump water heater. The determination module 502 is configured to determine, based on the current operation state, a PV surplus electricity consumption scheme of the PV power generation system. The control module 503 is configured to control, based on the PV surplus electricity consumption scheme, operation of the variable-frequency heat pump water heater. Operation states of the variable-frequency heat pump water heater comprise at least a first state where heating is not started and a second state where heating is performed based on a compressor; types of the PV surplus electricity consumption scheme comprise at least a first scheme corresponding to the first state and a second scheme corresponding to the second state.

In some embodiments, if the current operation state is the first state, the PV surplus electricity consumption scheme is the first scheme, and the control module 503 is specifically configured to:
acquire a SOC value of an energy storage unit in the PV power generation system, an on-grid power value transmitted by the PV power generation system to a power grid, and a current water temperature value of the variable-frequency heat pump water heater; and
if it is determined that the SOC value is equal to or greater than a first set value, the on-grid power value is equal to or greater than a first power value, and the current water temperature value is less than or equal to a second set value, adjust a set temperature value of the variable-frequency heat pump water heater to be a sum of the current water temperature value and a temperature hysteresis, and control the compressor of the variable-frequency heat pump water heater to start operation.

In some embodiments, if the current operation state is the second state, the PV surplus electricity consumption scheme is the second scheme, and the control module 503 is specifically configured to:
if it is determined that an operation time period of the compressor after it is started reaches a first set time period, acquire a SOC value of an energy storage unit in the PV power generation system and an on-grid power value transmitted by the PV power generation system to a power grid; and
if it is determined that the SOC value is equal to or greater than a third set value, and the on-grid power value is equal to or greater than a second power value, adjust, based on a set temperature adjustment value and a current set temperature value of the variable-frequency heat pump water heater, the set temperature value of the variable-frequency heat pump water heater.

In some embodiments, the control module 503 specifically configured to adjust, based on the set temperature adjustment value and the current set temperature value of the variable-frequency heat pump water heater, the set temperature value of the variable-frequency heat pump water heater comprises:
if the current set temperature value is an initial set temperature value, updating the set temperature value to be a sum of the initial set temperature value and the set temperature adjustment value; and
if the current set temperature value is not one of the initial set temperature value and a set temperature upper limit value, and the current set temperature value has been maintained for a second set time period, updating the set temperature value to be a smaller one of a sum of the current set temperature value and the set temperature adjustment value, and the set temperature upper limit value.

In some embodiments, if the variable-frequency heat pump water heater is provided with an electric heater configured to perform electric auxiliary heating, and the electric heater is not turned on in the second state, then the control module 503 is further configured to: if the current set temperature value is the set temperature upper limit value, and the current set temperature value has been maintained for the second set time period, turn on the electric heater.

In some embodiments, if the variable-frequency heat pump water heater is provided with an electric heater configured to perform electric auxiliary heating, the operation states of the variable-frequency heat pump water heater further comprise a third state where only the electric heater is started to perform heating; the types of the PV surplus electricity consumption scheme further comprise a third scheme corresponding to the third state.

In some embodiments, if the current operation state is the third state, the PV surplus electricity consumption scheme is the third scheme, and the control module 503 is specifically configured to:
acquire an on-grid power value transmitted by the PV power generation system to a power grid; and
if it is determined that the on-grid power value is equal to or greater than a third power value, adjust a set temperature value of the variable-frequency heat pump water heater to be a set temperature upper limit value.

In an actual application, the acquisition module 501, the determination module 502 and the control module 503 may be implemented by a processor of the variable-frequency heat pump water heater. Of course, the processor needs to execute a computer program in a memory to implement its function.

It should be noted that the apparatus for controlling the variable-frequency heat pump water heater provided in the above embodiment is exemplified only with division of the above program modules when control of the variable-frequency heat pump water heater is performed. In an actual application, the above processes may be assigned to and completed by different program modules according to requirements, that is, an internal structure of the apparatus is divided into different program modules to complete all or part of the above processes. Furthermore, the apparatus for controlling the variable-frequency heat pump water heater provided in the above embodiment and the embodiment of the method for controlling the variable-frequency heat pump water heater belong to the same concept, and specific implementation processes of the apparatus refer to the method embodiment for the details and will not be elaborated here.

Based on hardware implementations of the above program modules and in order to implement the method according to the embodiment of the application, an embodiment of the application further provides a variable-frequency heat pump water heater. FIG. 6 shows only exemplary structures of the variable-frequency heat pump water heater, rather than all structures thereof. Part or all of the structures shown in FIG. 6 may be implemented according to requirements.

As shown in FIG. 6, the variable-frequency heat pump water heater 600 provided in the embodiment of the application comprises at least one processor 601, a memory 602 and a user interface 603. Various components in the variable-frequency heat pump water heater 600 are coupled together through a bus system 604. It may be understood that the bus system 604 is used to implement connection and communication between these components. The bus system 604 comprises a power bus, a control bus and a state signal bus in addition to a data bus. However, various buses are marked as the bus system 604 in FIG. 6 for the sake of clarity.

The user interface 603 may comprise a trackball, a click wheel, keys, buttons, a touch pad, or a touch screen, etc.

The memory 602 in the embodiment of the application is configured to store various types of data to support operations of the variable-frequency heat pump water heater. Examples of such data comprise any computer program intended to operate on the variable-frequency heat pump water heater.

The method for controlling the variable-frequency heat pump water heater disclosed in the embodiment of the application may be applied to the processor 601, or may be implemented by the processor 601. The processor 601 may be an integrated circuit chip with a signal processing capability. During implementation, each operation of the method for controlling the variable-frequency heat pump water heater may be completed by an integrated logic circuit in form of hardware in the processor 601 or instructions in form of software. The above processor 601 may be a general processor, a Digital Signal Processor (DSP) or other programmable logic devices, a discrete gate or transistor logic device, a discrete hardware component, etc. The processor 601 may implement or perform various methods, operations and logic block diagrams disclosed in the embodiments of the application. The general processor may be a microprocessor or any conventional processor, etc. Operations of the method disclosed in combination with the embodiments of the application may be directly embodied as being performed or completed by a decoding processor in form of hardware or by a combination of hardware and software modules in the decoding processor. The software module may be located in a storage medium which is located in the memory 602, the processor 601 reads information in the memory 602 and completes, in combination with its hardware, operations of the method for controlling the variable-frequency heat pump water heater provided in the embodiment of the application.

In an exemplary embodiment, the variable-frequency heat pump water heater may be implemented by one or more Application Specific Integrated Circuits (ASIC), a DSP, a Programmable Logic Device (PLD), a Complex Programmable Logic Device (CPLD), a Field Programmable Gate Array (FPGA), a general processor, a controller, a Micro Controller Unit (MCU), a microprocessor, or other electronic components to perform the above method.

It may be understood that the memory 602 may be a volatile memory or a non-volatile memory, or may comprise both volatile and non-volatile memories. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disk, or a Compact Disc Read-Only Memory (CD-ROM); the magnetic surface memory may be a magnetic disk memory or a magnetic tape memory. The volatile memory may be a Random Access Memory (RAM) which is used as an external cache. By way of exemplary rather than limiting descriptions, many forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory described in the embodiment of the application is intended to comprise, but is not limited to these and any other suitable types of memories.

In an exemplary embodiment, an embodiment of the application further provides a computer storage medium. Specifically the computer storage medium may be a computer-readable storage medium, for example, may comprise the memory 602 storing a computer program, and the above computer program may be executed by the processor 601 of the variable-frequency heat pump water heater to complete operations described in the method according to the embodiment of the application. The computer-readable storage medium may be a memory such as a ROM, a PROM, an EPROM, an EEPROM, a flash memory, a magnetic surface memory, an optical disk, or a CD-ROM, etc.

It should be noted that "first", "second" or the like are intended to distinguish similar objects, and are not necessarily intended to describe a specific order or sequence.

Furthermore, the technical solutions described in the embodiments of the application may be arbitrarily combined there-between without conflict.

The above descriptions are only specific implementations of the application, however, the scope of protection of the application is not limited thereto. Variation or replacement easily conceived by any technician familiar with this technical field within the technical scope disclosed in the application, should fall within the scope of protection of the application. Therefore, the scope of protection of the application should be subject to the scope of protection of the claims.

## Claims

1. A method for controlling a variable-frequency heat pump water heater, the variable-frequency heat pump water heater powered by a grid-connected photovoltaic (PV) power generation system, the method comprising:
acquiring a current operation state of the variable-frequency heat pump water heater;
determining, based on the current operation state, a PV surplus electricity consumption scheme of the PV power generation system; and
controlling, based on the PV surplus electricity consumption scheme, operation of the variable-frequency heat pump water heater,
wherein operation states of the variable-frequency heat pump water heater comprise at least a first state where heating is not started and a second state where heating is performed based on a compressor; types of the PV surplus electricity consumption scheme comprise at least a first scheme corresponding to the first state and a second scheme corresponding to the second state.

2. The method of claim 1, wherein if the current operation state is the first state, the PV surplus electricity consumption scheme is the first scheme, and controlling, based on the PV surplus electricity consumption scheme, operation of the variable-frequency heat pump water heater comprises:
acquiring a state of charge (SOC) value of an energy storage unit in the PV power generation system, an on-grid power value transmitted by the PV power generation system to a power grid, and a current water temperature value of the variable-frequency heat pump water heater; and
if it is determined that the SOC value is equal to or greater than a first set value, the on-grid power value is equal to or greater than a first power value, and the current water temperature value is less than or equal to a second set value, adjusting a set temperature value of the variable-frequency heat pump water heater to be a sum of the current water temperature value and a temperature hysteresis, and controlling the compressor of the variable-frequency heat pump water heater to start operation.

3. The method of claim 1, wherein if the current operation state is the second state, the PV surplus electricity consumption scheme is the second scheme, and controlling, based on the PV surplus electricity consumption scheme, operation of the variable-frequency heat pump water heater comprises:
if it is determined that an operation time period of the compressor after it is started reaches a first set time period, acquiring a state of charge (SOC) value of an energy storage unit in the PV power generation system and an on-grid power value transmitted by the PV power generation system to a power grid; and
if it is determined that the SOC value is equal to or greater than a third set value, and the on-grid power value is equal to or greater than a second power value, adjusting, based on a set temperature adjustment value and a current set temperature value of the variable-frequency heat pump water heater, the set temperature value of the variable-frequency heat pump water heater.

4. The method of claim 3, wherein adjusting, based on the set temperature adjustment value and the current set temperature value of the variable-frequency heat pump water heater, the set temperature value of the variable-frequency heat pump water heater comprises:
if the current set temperature value is an initial set temperature value, updating the set temperature value to be a sum of the initial set temperature value and the set temperature adjustment value; and
if the current set temperature value is not one of the initial set temperature value and a set temperature upper limit value, and the current set temperature value has been maintained for a second set time period, updating the set temperature value to be a smaller one of a sum of the current set temperature value and the set temperature adjustment value, and the set temperature upper limit value.

5. The method of claim 4, further comprising if the variable-frequency heat pump water heater is provided with an electric heater configured to perform electric auxiliary heating, and the electric heater is not turned on in the second state:
if the current set temperature value is the set temperature upper limit value, and the current set temperature value has been maintained for the second set time period, turning on the electric heater.

6. The method of claim 1, wherein if the variable-frequency heat pump water heater is provided with an electric heater configured to perform electric auxiliary heating, the operation states of the variable-frequency heat pump water heater further comprise a third state where only the electric heater is started to perform heating; the types of the PV surplus electricity consumption scheme further comprise a third scheme corresponding to the third state.

7. The method of claim 6, wherein if the current operation state is the third state, the PV surplus electricity consumption scheme is the third scheme, and controlling, based on the PV surplus electricity consumption scheme, operation of the variable-frequency heat pump water heater comprises:
acquiring an on-grid power value transmitted by the PV power generation system to a power grid; and
if it is determined that the on-grid power value is equal to or greater than a third power value, adjusting a set temperature value of the variable-frequency heat pump water heater to be a set temperature upper limit value.

8. An apparatus for controlling a variable-frequency heat pump water heater, the variable-frequency heat pump water heater powered by a grid-connected photovoltaic (PV) power generation system, the apparatus comprising:
an acquisition module, configured to acquire a current operation state of the variable-frequency heat pump water heater;
a determination module, configured to determine, based on the current operation state, a PV surplus electricity consumption scheme of the PV power generation system; and
a control module, configured to control, based on the PV surplus electricity consumption scheme, operation of the variable-frequency heat pump water heater,
wherein operation states of the variable-frequency heat pump water heater comprise at least a first state where heating is not started and a second state where heating is performed based on a compressor; types of the PV surplus electricity consumption scheme comprise at least a first scheme corresponding to the first state and a second scheme corresponding to the second state.

9. A variable-frequency heat pump water heater, powered by a grid-connected photovoltaic (PV) power generation system, comprising a processor and a memory configured to store a computer program executable on the processor,
wherein the processor is configured to perform steps of a method of any one of claims 1 to 7 when the processor executes the computer program.

10. A computer storage medium, having stored thereon a computer program, wherein steps of a method of any one of claims 1 to 7 are implemented when the computer program is executed by a processor.
